(19) Europäisches Patentamt
European Patent Office
Office européen des brevets

(11) Publication number: **0 009 995**
**B1**

(12) **EUROPEAN PATENT SPECIFICATION**

(45) Date of publication of patent specification: **08.06.83**

(51) Int. Cl.³: **C 08 G 18/24**

(21) Application number: **79302150.2**

(22) Date of filing: **09.10.79**

(54) **Method for preparing flexible polyurethane foam.**

(30) Priority: **10.10.78 US 949619**

(43) Date of publication of application: **16.04.80 Bulletin 80/8**

(45) Publication of the grant of the patent: **08.06.83 Bulletin 83/23**

(84) Designated Contracting States: **AT BE CH DE FR GB IT NL SE**

(56) References cited:
**AT - B - 340 693**
**DE - A - 2 031 073**
**US - A - 3 067 149**
**US - A - 3 620 985**
**US - A - 4 048 100**
**US - A - 4 052 346**
**US - A - 4 085 072**

**The file contains technical information submitted after the application was filed and not included in this specification**

(73) Proprietor: **M & T CHEMICALS, INC.**
**One Woodbridge Center**
**Woodbridge, New Jersey 07095 (US)**

(72) Inventor: **Treadwell, Kenneth**
**930 Main Street**
**Rahway, New Jersey 07065 (US)**
Inventor: **Kenney, James Franklin**
**5 Highfield Circle**
**Mendham, New Jersey 07945 (US)**

(74) Representative: **Ellis, John Clifford Holgate et al,**
**MEWBURN ELLIS & CO. 2/3 Cursitor Street**
**London EC4A 1BQ (GB)**

**EP 0 009 995 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method for preparing flexible polyurethane foam

This invention relates to the preparation of flexible polyurethane foams employing certain gel catalysts to obtain polyurethane foams having high levels of oxidative stability and resiliency relative to products obtained using conventional organotin catalysts with compounds containing phosphorus and halogen.

Flexible polyurethane foams are widely used in the manufacture of furniture, particularly seat cushions, and as packaging material for delicate instruments and other articles that are susceptible to damage during handling and transit. If the foam is incorporated into a piece of furniture or other durable product, the foam must withstand exposure of several years or longer to elevated temperatures, atmospheric oxygen, or both without undergoing significant degradation, resulting in a gradual loss of resiliency and structural strength which may culminate in disintegration of the foam.

It is known to prepare flexible cellular polyurethanes by reacting polyols containing two or more reactive hydrogen atoms, as determined by the Zerewitinoff method, with polyfunctional isocyanates in the presence of a polymerization or gel catalyst and a blowing agent such as water or a relatively low boiling fluorocarbon. A surfactant is often included in the reaction mixture together with a blowing catalyst to obtain the desired uniformly small cell size within the foam when water is used as the blowing agent.

U.S. Patent Specification 3,620,985 discloses that organotin compounds are effective gel catalysts for cellular polyurethanes. Compounds of the general formula $R_aSnX_b$, wherein R is typically butyl or other alkyl radical containing from 1 to 20 carbon atoms and X is halogen or other anionic radical and *a* and *b* are integers and $a+b=4$, are less than satisfactory for preparing flexible foams that are exposed to atmospheric oxygen, elevated temperatures, i.e. above about 50°C, or both over extended periods of time. Under these conditions, the foams may lose resiliency and structural integrity, sometimes to the extent that they disintegrate when compressed. This is particularly true for those foams derived from polyols that are reaction products of propylene oxide and glycerine. These polyols may also contain end groups derived from ethylene oxide to obtain hydroxyl groups bonded to primary rather than secondary carbon atoms. High resiliency polyurethane foams derived from polyols that contain side chains obtained by the graft polymerization of acrylonitrile, styrene or other vinyl monomer onto a poly(propylene oxide) backbone are usually less susceptible to oxidative and thermal degradation. However, in the presence of conventional organotin gel catalysts even these products undergo a significant decrease in structural strength and become brittle following prolonged exposure to oxygen and/or heat.

The resistance of flexible polyurethane foams to oxidatively and thermally induced degradation can be improved by employing a phosphorus compound and a halogen compound in combination with an organotin gel catalyst. Catalyst compositions of this type are disclosed in United States Patent Specifications 3,067,149; 4,048,100; 4,052,346 and British Patent Specification 1,003,201. This type of catalyst composition may be suitable for certain applications where high resiliency is not a requirement, since typical foams prepared using these catalyst compositions recover only a small fraction of their original height within 30 minutes after being compressed to 10% of their original height for 22 hours at a temperature of 70°C.

An objective of this invention is to improve the recovery properties of flexible polyurethane foams prepared using gel catalyst compositions containing an organotin compound, phosphorus and a halogen. Surprisingly it has now been found that if tin, phosphorus and halogen are chemically combined in a single molecule the resultant foam exhibits improved stability at elevated temperatures relative to a foam prepared using the organotin compound as gel catalyst in the absence of phosphorus and halogen and, in addition, exhibits excellent recovery following prolonged compression.

This invention provides a method for preparing a flexible polyurethane foam exhibiting improved resiliency and resistance to heat-induced degradation by reacting a polyether type polyol containing at least two active hydrogen atoms per molecule, as determined by the Zerewitinoff method, with a polyfunctional isocyanate, the reaction being conducted in the presence of a blowing agent and a catalytically effective amount of a gel catalyst. The invention is characterized in that the gel catalyst comprises a mono- or diorganotin ester of a phosphorus compound containing in chemically combined form tin, phosphorus and a halogen chosen from chlorine, bromine and iodine, the compound containing from 3 to 40% by weight of tin, from 2 to 20% by weight of phosphorus and from 3 to 70% by weight of the said halogen, and the phosphorus compound being a phosphoric acid, phosphorous acid, phosphonic acid, phosphinic acid, thiophosphorous acid, phosphoryl chloride, or an ester of one of said phosphorus containing acids. In many of the gel catalysts the amount of tin will not be more than 30% by weight.

U.S. Patent Specification 4 085 072 describes the manufacture of flexible cellular polyurethane using a gel catalyst in which an organotin compound is complexed with a tertiary amine, a tertiary phosphine or a tertiary phosphine oxide. It does not suggest the use of an ester containing tin, phosphorus and halogen in combined form, nor the remarkable recovery properties exhibited by foams manufactured by the method of the present invention.

The present gel catalysts are useful for preparing flexible polyurethane foams from substantially all of the known polyether polyols, polyfunctional isocyanates and blowing agents. The concentration of the gel catalyst is usually from 0.005 to 1%, based on the weight of polyol.

The present catalysts are organotin esters of phosphoric, phosphorous, thiophosphorous, phosphinic or phosphonic acid or phosphoryl chloride. Phosphoryl chloride is, in turn, a derivative of phosphoric acid. The organotin moiety

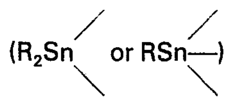

can be the only esterifying group present on the phosphorus-containing acid. Alternatively, the catalyst may be a mixed ester obtained by reacting an organotin halide or an organotin oxide or hydroxide with the desired phosphorus-containing ester derived from an alcohol or phenol. As used herein the term halogen refers to chlorine, bromine and iodine.

All of the present catalysts contain at least one chlorine, bromine or iodine atom that is bonded to tin, phosphorus or the hydrocarbon portion of an alcohol or phenol residue that is in turn, bonded to a phosphorus or a tin atom.

Preferably the said compound is chosen from compounds having the general formulae:

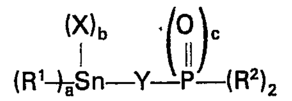

(I)

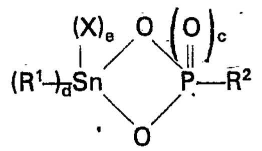

(II)

and

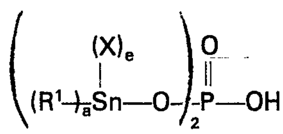

(III)

wherein $R^1$ is hydrocarbyl, haloalkyl or

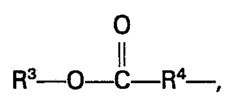

$R^2$ is hydrocarbyl, haloalkyl, halogen or —$OR^5$ wherein $R^5$ is hydrocarbyl or haloalkyl, $R^3$ is alkyl containing from 1 to 20 carbon atoms, cycloalkyl or phenyl, $R^4$ is —$CH_2CH_2$— or —$CH(CH_3)CH_2$—, X is chlorine, bromine or iodine, Y is oxygen or sulphur, *a*, *b* and *d* are each 1 or 2 and *e* is 0, 1 or 2 with the provisos that (i) the tin atom is always bonded to 4 atoms and (ii) the said compound always contains at least one chlorine, bromine or iodine bonded to tin, carbon or phosphorus, and *c* is 0 or 1. $R^1$, $R^2$ and $R^3$ may, for instance, be chosen from alkyl groups containing 1—8 carbon atoms; $R^2$ may be alkoxy containing 1—8 carbon atoms or $\beta$-chloroethyl or $R^2$ may be chlorine with *c* being 1.

The term "hydrocarbyl" includes alkyl, cycloalkyl, aryl, aralkyl and alkaryl groups. Any alkyl group and any haloalkyl group contains from 1 to 20 carbon atoms, and the preferred aryl group is phenyl.

Organotin esters of phosphorus-containing acids and organic esters thereof are reported in the chemical literature. These compounds may be prepared by reacting an organotin oxide or hydroxide with an organic ester of the desired phosphorus-containing acid under conditions conventionally employed for transesterification reactions and in the presence of a liquid hydrocarbon that forms an azeotropic mixture with the alcohol formed as a by-product of the transesterification reaction. Alternatively, the desired organotin halide can be reacted with the sodium salt of the phosphorus-containing acid or a partial ester thereof.

If the final compound contains a chlorine, bromine or iodine atom bonded to tin, the corresponding organo-hydroxyhalostannane can be employed as the organotin reactant. An example of this class of compounds is butylchlorodihydrostannane $C_4H_9SnCl(OH)_2$. This class of compounds is disclosed in United States Patent Specification 3,758,536, the pertinent sections of which are hereby incorporated by reference.

The accompanying examples disclose procedures for preparing various classes of catalysts that are useful in accordance with the present method.

Specific compounds that are within the scope of this invention are represented by the formulae

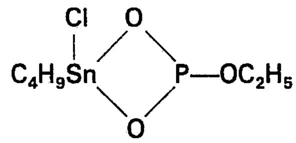

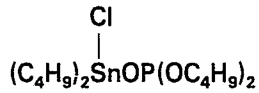

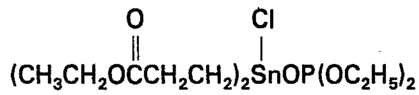

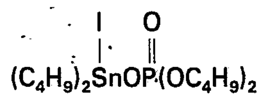

$(C_4H_9)_2Sn(Cl)OP(OC_2H_5)_2$

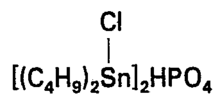

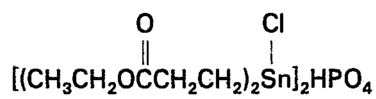

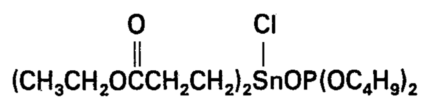

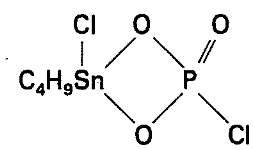

$C_4H_9Sn(Cl)[OP(OC_2H_5)_2]_2$

$C_4H_9Sn(Cl_2)OP(OC_2H_5)_2$

$C_4H_9Sn(Cl)(OH)OP(OC_2H_5)_2$

$C_4H_9Sn(Cl_2)H_2PO_4$

$C_4H_9Sn(Cl)(H_2PO_4)_2$

$(C_4H_9)_2Sn(Cl)H_2PO_4$

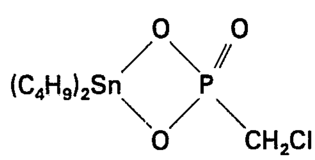

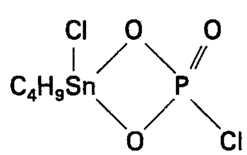

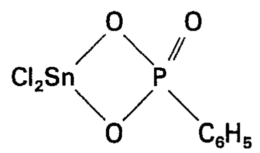

$(C_4H_9)_2Sn(Cl)OPO(C_6H_5)_2$

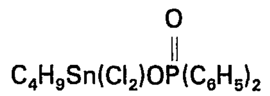

$Cl_2Sn[OP(OC_2H_5)_2]_2$

$(C_4H_9)_2Sn(Cl)SP(OC_2H_5)_2$

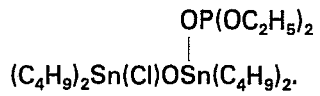

Flexible polyurethane foams of improved oxidative stability may be prepared by reacting a polyfunctional isocyanate with a polyether polyol containing two or more reactive hydrogen atoms as determined by the Zerewitinoff method. In accordance with the present method, this reaction is catalyzed by one of the organotin compounds as defined in this invention. This reaction is usually exothermic and occurs concurrently with gas evolution, resulting in formation of a cellular structure. The gas-evolving or blowing agent can be water, which reacts with excess polyfunctional isocyanate to yield carbon dioxide. Water can be used in combination with a volatile liquid fluorocarbon such as trichlorofluoromethane. When water is present as a blowing agent the reaction mixture may also contain a catalyst for the blowing or foaming reaction to achieve the co-ordination between the foaming and polymerization reactions that is required to retain the structural integrity of the foam and achieve the desired uniformly small cell size within the foam. Tertiary amines such as N,N-dimethylamino ethyl ether and triethylene diamine are preferred blowing catalysts. One to five tenths of one part by weight of blowing catalyst is usually employed for every one hundred parts of polyol. Silicon compounds, particularly reaction products of silanes with 1,2-olefin oxides, are often included as cell modifying agents.

If one or more amines are employed as blowing catalyst, such will also catalyze the reaction between the polyfunctional isocyanate and polyol. The use of amines as gel catalysts is well known in the prior art; however, amines are often less than satisfactory due to their low catalytic activity. In the past it was necessary to employ a prepolymer in order to attain the desired molecular weight while avoiding unduly long rise times.

The polyfunctional isocyanates used to prepare polyurethanes using the present gel catalysts include both polyisocyanates and polyisothiocyanates (and the terms "isocyanate" and "polyisocyanate" are used herein to include isothiocyanates and polyisothiocyanates respectively). While the invention is described with specific references to the reaction of certain diisocyanates, it is generally applicable to the reaction of any compound containing two or more —N=C=G radicals wherein G is oxygen or sulphur. Compounds within this generic definition include polyisocyanates and polyisothiocyanates of the formula $R^6(NCG)_x$ in which $x$ is 2 or more. $R^6$ can be alkylene, substituted alkylene, arylene, substituted arylene or other divalent hydrocarbon radical that may optionally contain one or more aryl-NCG bonds and one or more alkyl-NCG bonds.

Although a variety of organic polyisocyanates containing 3 or more isocyanate radicals per molecule can be used in the practice of this invention, diisocyanates are usually preferred in flexible foam formulations. Suitable isocyanates include alkylene diisocyanates such as hexamethylene diisocyanate, and decamethylene diisocyanate, the isomeric toluene diisocyanates and naphthalene diisocyanates, 4,4′-diphenylmethane diisocyanates and mixtures of two or more of the foregoing diisocyanates. Triisocyanates obtained by reacting 3 moles of an arylene diisocyanate for each mole of a triol, e.g., the products formed from 3 moles of tolylene diisocyanate and 1 mole of hexane triol may also be present in the reaction mixture. A preferred polyisocyanate is a mixture containing 80% by weight of the 2,4-isomer and 20 percent of the 2,6-isomer of toluene diisocyanate. Other suitable polyfunctional isocyanates include hexamethylene diisocyanate, xylylene diisocyanate, 1-methyl-2,4-diisocyanatocyclohexane, phenylene diisocyanates, chlorophenylene diisocyanates, diphenylmethane-4,4′-diisocyanate, naphthalene-1,5-diisocyanate, triphenylmethane-4,4′,4″-triisocyanate and xylene-$\alpha,\alpha'$-diisothiocyanate. Oligomeric and polymeric isocyanates containing at least two isocyanate or isocyanate groups are also useful in the present method, as are compounds of the general formula $M(NCG)_x$ wherein $x$ is 2 or more and M is a difunctional or polyfunctional atom or group and G is as defined above. Examples of this type include ethylphosphonic diisocyanate, $C_2H_5P(O)(NCO)_2$, phenyl-

phosphinic diisocyanate, $C_6H_5P(NCO)_2$, compounds containing a ≡Si—NCG group, isocyanates derived from sulphonamides (containing —$SO_2$NCO groups), cyanic acid, and thiocyanic acid.

Suitable polyether-type polyols include polyalkylene glycols such as polyethylene glycols and polypropylene glycols. The molecular weight of these compounds is preferably between about 200 and 5000.

The preparation of polyether based urethane foams can be carried out by forming a prepolymer, i.e. prereacting molar equivalents of the hydroxyl-terminated polyether and isocyanate in the absence of water and thereafter producing a foam by the addition of excess isocyanate, water and optionally other blowing agents and one of the present gel catalysts. In such a method of operation the prepolymer may itself be regarded as the polyether polyol. Alternatively, foams may be produced by the "one-shot" method in which all of the reactants and catalysts are mixed together and allowed to react in the presence of water or other blowing agent.

The polyfunctional isocyanate is typically present in an amount of 5 to 300 percent, preferably from 30 to 50 percent by weight of the polyol. Water may optionally be present as a blowing agent to react with excess isocyanate and generate sufficient carbon dioxide to produce a foam of the desired density. The amount of water is between 1 and 10 percent, preferably between 3 and 5 percent, based upon the weight of the polyol.

The amount of isocyanate used can be in excess of the stoichiometric amount required to react with the active hydrogen atoms present in the polyol and any water present, thereby forming allophanate

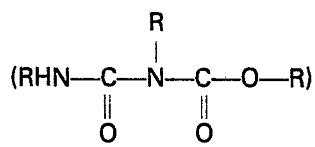

and biuret

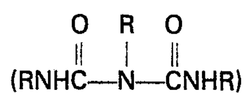

linkages in the polymer chains. Depending upon the desired density of the urethane foam and the amount of cross-linking desired, the ratio of isocyanate equivalents to equivalents of active hydrogen should be from 0.8 to 1.2, respectively, preferably between 0.9 and 1.1.

The gel catalyst and one or more blowing catalysts are desirably present in an amount corresponding to from 0.01 to 10 parts by weight per 100 parts of polyol. Preferably the gel catalyst is present in an amount corresponding to 0.005 to 1.0 part by weight per 100 parts of polyol.

The following preparations and examples demonstrate the oxidative stability and excellent recovery properties that distinguish flexible foams prepared using the present gel catalysts from those obtained using organotin compounds alone or in combination with a halogen compound and a phosphorus compound. All parts and percentages of constituents are by weight unless otherwise specified.

Preparation 1

Preparation of dibutylchlorotin diethyl phosphite

$$2\ Na+2\ HOP(OEt)_2 \rightarrow 2NaOP(OEt)_2+H_2$$

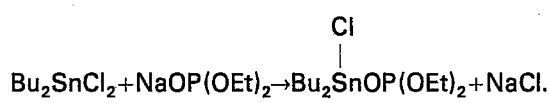

Sodium diethyl phosphite was prepared by stirring under a nitrogen atmosphere 9.2 g (0,4 AU) sodium and 55.2 g (0.4 mole) diethyl hydrogen phosphite in 150 cc of tetrahydrofuran while maintaining the temperature of the reaction mixture below 41°C. The resultant product was then added dropwise to a solution containing 122 g (0.4 mole) of dibutyltin dichloride and 100 cc tetrahydrofuran. The addition was carried out under a nitrogen atmosphere and the temperature of the reaction mixture was maintained at 40°C for 2 hours and at ambient temperature for 3 hours. The reaction mixture was then filtered and the solvent removed under reduced pressure. The residual material was again filtered and diethyl hydrogen phosphate was removed by heating the filtrate at 80°C under reduced pressure until no additional distillate could be collected. The residue weighed 134 g and was found to contain 29.08% tin, 9.49% chlorine and 6.89% phosphorus. The calculated values for these elements are 29.28%, 8.76% and 7.64%, respectively.

Preparation 2

Preparation of bis(dibutylchlorotin) phosphate

A glass reactor was charged with 91.1 g (0.3 mole) dibutyltin dichloride, 200 cc *n*-butanol, 50 cc water and 27.3 g (0.15 mole) dibasic sodium phosphate. The resultant mixture was heated under a nitrogen atmosphere and the water removed by azeotropic distillation until the vapour temperature reached 117°C. The reaction mixture was then filtered and the liquid phase was concentrated under reduced pressure. The liquid residue solidified upon standing and weighed 83 g. The product was found to contain 35.60% tin, 11.18% chlorine and 4.42% phosphorus. The calculated values for these elements in the expected product are 37.53% tin, 11.21% chlorine and 4.90% phosphorus.

Preparation 3

Preparation of di[bis(β-carboethoxyethyl)chlorotin]phosphate

A glass reactor was charged with 39.2 g (0.1 mole) bis(β-carboethoxyethyl)tin dichloride, that had previously been dissolved in 150 cc of toluene, and 7.1 g (0.05 mole) dibasic sodium phosphate. The resultant mixture was stirred and heated to the boiling point (109°C) for 2 hours, then cooled to 90°C and filtered. The filtrate was then concentrated under reduced pressure to yield 35 g of a liquid product, di[*bis*(β-carboethoxyethyl)chlorotin] phosphate, which was found to contain 23.22% tin, 8.96% chlorine and 5.77% phosphorus.

Preparation 4

Preparation of butylchlorotin cyclic O,O′-monoethyl phosphite

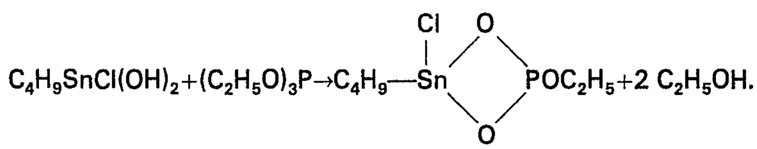

A glass reactor was charged with 73.6 g (0.3 mole) butylchlorotin dihydroxide, 49.9 g (0.3 mole) triethyl phosphite and 225 cc toluene. The resultant mixture was stirred and heated to 95°C and the by-product ethanol was removed using azeotropic distillation. The reaction mixture was then heated to the boiling point for one hour, after which the mixture was filtered and the filtrate concentrated under reduced pressure. The residue weighed 102 g and was found to contain 32.83% tin, 8.50% phosphorus and 8.83% chlorine. The calculated values for the desired product are 33.66% tin, 8.77% phosphorus and 10.06% chlorine.

Preparation 5

Preparation of dibutylchlorotin dibutyl phosphite

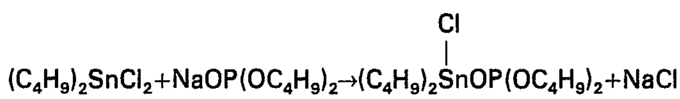

The aforementioned compound was prepared by the gradual addition under a nitrogen atmosphere, of 9,6 g (0.2 mole) sodium hydride to 28.8 g (0.2 mole) dibutyl hydrogen phosphite which had previously been dissolved in 50 cc of tetrahydrofuran. The resultant mixture was heated for 4 hours at 65°C, after which it was cooled to ambient temperature and added dropwise to 60.7 g (0.2 mole) dibutyltin dichloride which had previously been dissolved in 100 cc of tetrahydrofuran. The resultant mixture was then heated under a nitrogen atmosphere for 3 hours at 65°C, after which it was filtered and the filtrate was then concentrated under reduced pressure to yield 68 g of a clear amber liquid. The liquid was found to contain 27.87% tin, 7.17% chlorine and 4.89% phosphorus. The calculated values for the expected product are 25.73% tin, 7.69% chlorine and 6.72% phosphorus.

Preparation 6

Preparation of bis(β-carboethoxyethyl)chlorotin diethyl phosphite

$$Na+HOP(OC_2H_5)_2 \rightarrow NaOP(OC_2H_5)_2+H_2$$

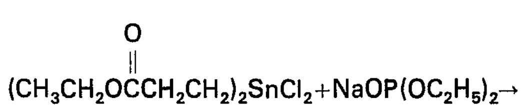

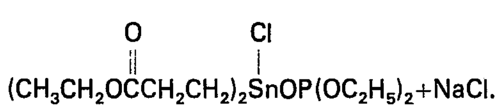

A glass reactor equipped with a mechanically driven stirrer, condenser and nitrogen inlet was charged with 4.6 g sodium. Diethyl hydrogen phosphate, 27.6 g (0.2 mole), dissolved in 50 cc tetrahydrofuran was added slowly while the temperature was maintained below 30°C. The reaction mixture was stirred at room temperature for 3 hours. The resultant sodium diethyl phosphite was added dropwise to 78.4 g (0.2 mole) *bis*(β-carboethoxyethyl)tin dichloride in 150 cc tetrahydrofuran. An exothermic reaction occured. The reaction mixture was stirred at ambient temperature for 3 hours and then filtered. Residual solvent was removed under reduced pressure. The liquid residue weighed 81 g.

| | Calculated | By analysis |
|---|---|---|
| %Sn | 24.06 | 22.84 |
| %P | 6.28 | 5.83 |
| %Cl | 7.19 | 9.06 |

Preparation 7
Preparation of bis(β-carboethoxyethyl)chlorotin dibutyl phosphite

$$NaH+HOP(OC_4H_2)_2 \rightarrow NaOP(OC_4H_9)_2$$

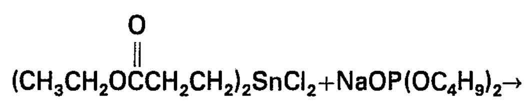

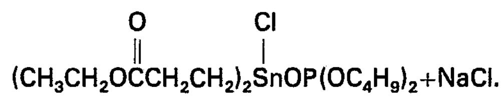

Sodium dibutyl phosphite was prepared by the gradual addition at room temperature of 19.4 g (0.1 mole) dibutyl phosphite to a solution containing 4.8 g (0.1 mole) sodium hydride and 50 cc tetrahydrofuran. The mixture was stirred at room temperature for 6 hours and 39.2 g (0.1 mole *bis*(β-carboethoxyethyltin) dichloride dissolved in 50 cc of tetrahydrofuran were added. The temperature spontaneously increased to 60°C. Following completion of the addition the reaction mixture was heated at 65°C for 2 hours. The mixture was filtered and the filtrate was then concentrated under reduced pressure. 41 g of liquid product was obtained.

| | Calculated | By analysis |
|---|---|---|
| %Sn | 21.61 | 21.00 |
| %Cl | 6.46 | 6.65 |
| %P | 5.64 | 5.55 |

Preparation 8
Preparation of butylchlorotin cyclic-O,O′-chlorophosphorodate

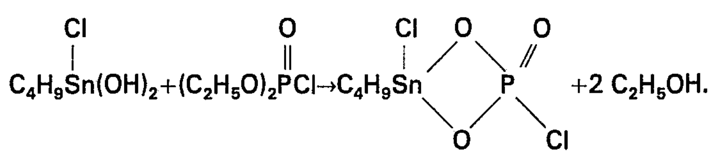

A glass reactor equipped with a mechanically driven stirrer, condenser, thermometer, nitrogen inlet and Dean Stark trap was charged with 73.6 g (0.3 mole) butylchlorotin dihydroxide, 51.8 g (0.3 mole) diethyl chlorophosphate and 200 cc of toluene. The mixture was heated to 95°C to remove ethanol by azeotropic distillation. After all the ethanol was removed, the reaction mixture was concentrated under reduced pressure to yield 94 g of a liquid product.

| | Calculated | By analysis |
|---|---|---|
| %Sn | 36.44 | 29.77 |
| %Cl | 21.76 | 16.28 |
| %P | 9.51 | 7.92 |

Preparation 9

Preparation of dibutyliodotin dibutyl phosphate

$$(C_4H_9)_2SnI_2+(C_4H_9O)_3PO\rightarrow(C_4H_9)_2\overset{I}{\overset{|}{Sn}}O\overset{O}{\overset{\|}{P}}(OC_4H_9)_2+C_4H_9I.$$

A glass reactor equipped with a condenser, stirrer and nitrogen inlet was charged with 43.5 g dibutyltin diiodide and 19.5 g tributyl phosphate. The resultant mixture was heated to 125—195°C. When 17.8 of butyliodide were collected, heating was discontinued and the reaction mixture was allowed to cool to ambient temperature. 44 g of a white solid product was obtained.

Example 1

Preparation of flexible polyurethane foams

The compounds described in the preceding nine preparations were employed as gel catalysts for flexible polyurethane foams using the following formulation:

| Ingredient | Parts (by weight) |
|---|---|
| Polyol | 100 |
| Water | 3.5 |
| Poly(oxyethylene oxypropylene) siloxane | 1.0 |
| Blowing catalyst | 0.45 |
| Gel catalyst | as specified |
| Toluene diisocyanate | 45.5 |

The above polyol was an ethylene oxide-propylene oxide copolymer available as "Niax" 16—56 from the Union Carbide Corporation. "Niax" is a Trade Mark.

The above blowing catalyst was a mixture containing 0.15 part of a commercially available tertiary amine blowing catalyst ("Polycat"-77, distributed by Abbott Laboratories) and 0.30 part of triethylenediamine (as a 33% solution in dipropylene glycol). "Polycat" is a Trade Mark.

The index of the above toluene diisocyanate was 105.

The reagents were blended for five seconds using a high speed mixer and then poured into a one litre-capacity polyethylene-lined paper cup and allowed to rise. Each of the resultant cylindrical foam samples was cut in half lengthwise and one of the halves was tested for oxidative and thermal stability in accordance with the procedure set forth in the American Society for Testing and Materials (ASTM) Test Method D-1564-71 (suffix A). The sample to be tested was placed in a circulating air oven at a temperature of 140°C for 22 hours, then withdrawn from the oven and allowed to cool for between 10 and 15 minutes. A portion of the flat surface of each sample was depressed to the maximum extent and the pressure released almost immediately. Samples that were sufficiently resilient to recover their original shape without any visible damage were considered to have passed the test and all others were considered failures.

The procedure employed to determine the 90% compression set value is described in the aforementioned ASTM test method, and consists of compressing a foam sample to 10% of its original height for 22 hours at a temperature of 70°C. The height of the foam sample is measured prior to compression and thirty minutes following release of compression. The 90% compression set value is calculated using the formula

$$90\%\ \text{compression set}=(t_o-t_f/t_o-t_s)\times 100.$$

In the foregoing formula $t_o$ is the height of the foam sample prior to compression, $t_f$ is the height of the sample measured 30 minutes following the release of compression and $t_s$ is the height of the spacer bar employed in the test procedure described in the aforementioned ASTM method.

Polyurethane foams employed in seat cushions and mattresses should exhibit 90% compression set values of less than about 15%. All of the present catalysts evaluated produced foams that were within this range. By comparison, foams prepared using several prior art catalyst compositions wherein the tin, phosphorus and halogen are distributed among two or three compounds exhibited 90% compression set values considerably above 15% and as high as 90%. These foams would not be suitable for use in seat cushions or mattresses.

The cream time, rise time, dry heat test results (pass or fail) and the 90% compression set values for three of the catalysts disclosed in the preceding examples are summarized in the following table.

| Parts of dibutylchlorotin diethyl phosphite | 0.13 Part | 0.25 Part | 0.37 Part |
|---|---|---|---|
| Cream time, sec. | 10 | 11 | 11 |
| Rise time, sec. | 82 | 76 | 78 |
| Dry heat test | Pass | Pass | Pass |
| 90% Compression set, % | 8 | 8 | 12 |

| Parts of bis(dibutylchlorotin) phosphate | 0.8 Part | 0.4 Part |
|---|---|---|
| Cream time, sec. | 12 | 13 |
| Rise time, sec. | 79 | 90 |
| Dry heat test | Pass | Pass |
| 90% Compression set, % | 12 | 8 |

| Parts of di[bis(β-carboethoxyethyl) chlorotin]phosphate | 0.6 Part |
|---|---|
| Cream time, sec. | 12 |
| Rise time, sec. | 82 |
| Dry heat test | Pass |
| 90% Compression set, % | 8 |

The combination of dibutyltin dilaurate and tris(2-chloroethyl) phosphate is exemplified in United States Patent Specification 3,067,149. The foam properties achieved using this prior art catalyst composition with one formulation identical to the one previously described in this specification and a second one similar to that described in the aforementioned United States Patent Specification 3,067,149 are summarized below.

The polyol disclosed in the aforementioned United States Patent Specification was replaced by the polyol employed in the formulation previously described in the present specification. The resultant foam passed the dry heat stability test, however, the 90% compression set value was 58%. When the same prior art catalyst components were employed in the formulation described in the present specification the foam properties were as follows.

| Parts of tris(2-chloroethyl) phosphate | Parts of dibutyltin dilaurate | Cream time sec. | Rise time sec. | Dry heat test | 90% Compression set (after heating) % |
|---|---|---|---|---|---|
| 0 | 0.5 | 9 | 75 | Fail | not determined |
| 1.5 | 0.2 | 10 | 68 | Pass | 77 |
| 1.5 | 0.35 | 9 | 71 | Pass | 36 |
| 2 | 0.5 | 9 | 80 | Pass | 80 |
| 4 | 0.5 | 9 | 67 | | 82 |

Example 1 (Comparative)

This Comparative Example demonstrates that combinations of a tin compound and a phosphorus compound do not provide the desired 90% compression set value of 15% or less. The formulation employed to prepare the foam was identical to that described in the first paragraph of the preceding Example 1.

A

| | |
|---|---|
| *Tris*(2-chloroethyl) phosphate | 0.46 part |
| Dibutyltin *bis*(*iso*octyl maleate) | 0.53 part |
| Cream time, sec. | 12 |
| Rise time, sec. | 66 |
| Dry heat test | Pass |
| 90% Compression set, % | 91 |

B

| | |
|---|---|
| Diethylhydrogen phosphite | 0.20 part |
| Dibutyltin dichloride | 0.45 part |
| Cream time, sec. | 23 |
| Rise time, sec. | 104 |
| Dry heat test | Pass |
| 90% Compression set, % | 78 |

| C | |
|---|---|
| Tris(2-chloroethyl) phosphite | 0.29 part |
| Dibutyltin bis(lauryl mercaptide) | 0.34 part |
| Cream time, sec. | 11 |
| Rise time, sec. | 60 |
| Dry heat test | Pass |
| 90% Compression set, % | 89 |

| D | |
|---|---|
| *Tris*(2-chloroethyl)phosphite | 0.135 part |
| Dibutyltin dilaurate | 0.115 part |
| Cream time, sec. | 11 |
| Rise time, sec. | 77 |
| Dry heat test | Pass |
| 90% Compression set, % | 92 |

| E | |
|---|---|
| Tris(nonylphenyl) phosphite | 0.54 part |
| Dibutyltin dichloride | 0.24 part |
| Cream time, sec. | 19 |
| Rise time, sec. | 107 |
| Dry heat test | Pass |
| 90% Compression set, % | 88 |

| F | |
|---|---|
| Triisodecyl phosphite | 0.32 part |
| Dibutyltin dichloride | 0.20 part |
| Cream time, sec. | 15 |
| Rise time, sec. | 99 |
| Dry heat test | Pass |
| 90% Compression set, % | 88 |

Example 2

This example demonstrates that foams prepared using a number of the catalysts employable in the present invention exhibit acceptable levels of dry heat stability and resiliency, the latter having been determined using the value for 25% (not by weight) indent load deflection (ILD) measured using ASTM test method D-1564-71 (suffix A). The catalysts are identified using the number of the preceding preparation in the present specification that discloses the preparation of the corresponding compound.

| Compound of preparation | Catalyst level, parts | Cream time, sec. | Rise time, sec. | Dry heat test | 25% ILD, lb./50 in$^2$ (kg/cm$^2$) |
|---|---|---|---|---|---|
| 1 | 0.13 | 10 | 82 | Pass | — |
| 2 | 0.40 | 13 | 90 | Pass | 14 (.020) |
| 3 | 0.60 | 12 | 82 | Pass | 22 (.031) |
| 4 | 0.20 | 13 | 86 | Pass | 20 (.028) |
| 5 | 0.35 | 13 | 76 | Pass | 25 (.035) |
| 6 | 0.20 | 12 | 67 | Pass | 22 (.031) |
| 7 | 0.35 | 10 | 66 | Pass | 17 (.024) |
| 8 | 0.20 | 17 | 124 | Pass | — |

The formulation employed to prepare the foams was identical to the one described in the first paragraph of the preceding Example 1.

## Claims

1. A method of preparing a flexible polyurethane foam by reacting a polyether polyol with a polyfunctional isocyanate or isothiocyanate in the presence of a blowing agent and a gel catalyst characterized in that the gel catalyst comprises a mono- or diorganotin ester of a phosphorus compound containing in chemically combined form tin, phosphorus and a halogen chosen from chlorine, bromine and iodine, the compound containing from 3 to 40% by weight of tin, from 2 to 20% by weight of phosphorus and from 3 to 70% by weight of the said halogen, and the phosphorus compound being a phosphoric acid, phosphorous acid, phosphonic acid, phosphinic acid, thiophosphorous acid, phosphoryl chloride, or an ester of one of said phosphorus containing acids.

2. A method of preparing a flexible polyurethane foam according to claim 1 characterised in that the polyether polyol is a prepolymer which has been made by reacting a polyether polyol with a polyfunctional isocyanate or isothiocyanate.

3. A method according to Claim 1 or Claim 2, wherein the tin content of the said compound is from 3 to 30% by weight.

4. A method according to any preceding claim, wherein the concentration of the gel catalyst is from 0.005 to 1%, based on the weight of polyol.

5. A method according to any preceding claim, wherein the said compound is chosen from compounds having the general formulae:

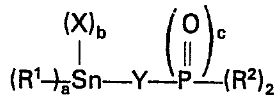 (I),

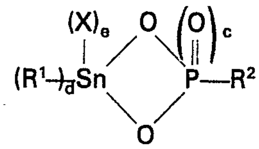 (II)

and

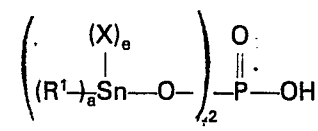 (III)

wherein $R^1$ is hydrocarbyl, haloalkyl or

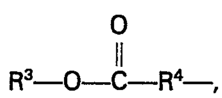

$R^2$ is hydrocarbyl, haloalkyl, halogen or $-OR^5$ wherein $R^5$ is hydrocarbyl or haloalkyl, $R^3$ is alkyl containing from 1 to 20 carbon atoms, cycloalkyl or phenyl, $R^4$ is $-CH_2CH_2-$ or $-CH(CH_3)CH_2-$, X is chlorine, bromine or iodine, Y is oxygen or sulphur, *a*, *b* and *d* are each 1 or 2 and *e* is 0, 1 or 2 with the provisos that (i) the tin atom is always bonded to 4 atoms and (ii) the said compound always contains at least one chlorine, bromine or iodine bonded to tin, carbon or phosphorus, and *c* is 0 or 1, the hydrocarbyl groups being alkyl, cycloalkyl, aryl, aralkyl or alkaryl groups, any alkyl or haloalkyl group having from 1 to 20 carbon atoms.

6. A method according to Claim 5, wherein $R^1$, $R^2$ and $R^3$ are chosen from alkyl groups containing 1—8 carbon atoms.

7. A method according to Claim 5, wherein $R^2$ is alkoxy containing 1—8 carbon atoms.

8. A method according to Claim 5, wherein $R^2$ is $\beta$-chloroethyl.

9. A method according to Claim 5, wherein $R^2$ is chlorine and *c* is 1.

10. A method according to Claim 5, wherein the said compound is chosen from:
dibutylchlorotin diethyl phosphite,
bis(dibutylchlorotin) phosphate,
di[*bis*($\beta$-carboethoxyethyl)chlorotin] phosphate,
butylchlorotin cyclic O,O′-monoethyl phosphite,
dibutylchlorotin dibutyl phosphite,
*bis*($\beta$-carboethoxyethyl)chlorotin diethyl phosphite,
*bis*($\beta$-carboethoxyethyl)chlorotin dibutyl phosphite,
butylchlorotin cyclic-O,O′-chlorophosphorodate, and
dibutyliodotin dibutyl phosphate.

**Patentansprüche**

1. Verfahren zur Herstellung eines flexiblen Polyurethanschaumes durch Umsetzen eines Polyätherpolyols mit einem polyfunctionellen Isocyanat oder Isothiocyanat, in Gegenwart eines Treibmittels und eines Gelkatalysators, dadurch gekennzeichnet, daß der Gelkatalysator einen Mono- oder Diorganozinnester einer Phosphorverbindung umfaßt, die in chemisch vereinigter Form Zinn, Phosphor und ein Halogen ausgewählt aus der Gruppe enthaltend Chlor, Brom und Jod, enthält, wobei die Verbindung 3—40 Gew.-% Zinn, 2—20 Gew.-% Phosphor und 3—70 Gew.-% des Halogens enthält und die Phosphorverbindung eine Phosphorsäure, eine phosphorige Säure, Phosphonsäure,

Phosphinsäure, thiophosphorige Säure, Phosphorylchlorid oder ein Ester einer dieser Phosphor enthaltenden Säuren ist.

2. Verfahren zur Herstellung eines flexiblen Polyurethanschaumes nach Anspruch 1, dadurch gekennzeichnet, daß das Polyätherpolyol ein Präpolymer ist, das durch Umsetzen eines Polyätherpolyols mit einem polyfunktionellen Isocyanat oder Isothiocyanat erhalten worden war.

3. Verfahren nach Anspruch 1 oder 2, dadurch gekennzeichnet, daß der Zinngehalt dieser Verbindung 3—30 Gew.-% beträgt.

4. Verfahren nach einem der vorhergehenden Ansprüche, dadurch gekennzeichnet, daß die Konzentration des Gelkatalysators von 0,005 bis 1 Gew.-%, bezogen auf das Gewichts des Polyols ist.

5. Verfahren nach einem der vorhergehenden Ansprüche, dadurch gekennzeichnet, daß die Verbindung ausgewählt ist aus Verbindungen mit den allgemeinen Formeln

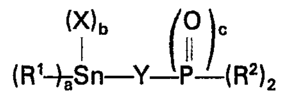

(I),

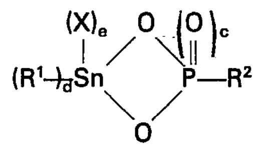

(II)

and

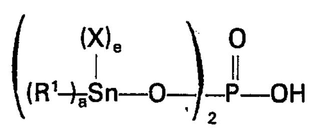

(III)

worin $R^1$ Hydrocarbyl, Haloalkyl oder

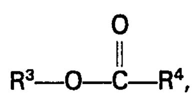

$R^2$ Hydrocarbyl, Haloalkyl, Halogen oder $—OR^5$ ist, worin $R^5$ Hydrocarbyl oder Haloalkyl ist, $R^3$ ein Alkyl mit 1—20 C-Atomen, Cycloalkyl oder Phenyl ist, $R^4$ $—CH_2CH_2—$ oder $—CH(CH_3)CH_2—$, ist, X Chlor, Brom oder Jod ist, Y Sauerstoff oder Schwefel ist, a, b und d jeweils 1 oder 2, und e 0, 1 oder 2 sind, mit der Maßgabe, daß (i) das Zinn-Atom immer an 4 Atome gebunden ist und (ii) die Verbindung immer mindestens ein Chlor, Brom oder Jod gebunden an Zinn, Kohlenstoff oder Phosphor enthält und c 0 oder 1 ist, wobei die Hydrocarbylgruppen Alkyl-, Cycloalkyl-, Aryl-, Aralkyl- oder Alkarylgruppen sind, wobei die Alkyl- bzw. Haloalkylgruppen jeweils 1—20 C-Atome aufweisen.

6. Verfahren nach Anspruch 5, dadurch gekennzeichnet, daß $R^1$, $R^2$ und $R^3$ ausgewählat sind aus Alkylgruppen mit 1—8 C-Atomen.

7. Verfahren nach Anspruch 5, dadurch gekennzeichnet, daß $R^2$ Alkoxy mit 1—8 C-Atomen ist.

8. Verfahren nach Anspruch 5, dadurch gekennzeichnet, daß $R^2$ $\beta$-chloroäthyl ist.

9. Verfahren nach Anspruch 5, dadurch gekennzeichnet daß $R^2$ Chlor und c 1 ist.

10. Verfahren nach Anspruch 5, dadurch gekennzeichnet, daß die Verbindung ausgewählt ist aus:
Dibutylchlorzinn-diäthylphosphit,
Bis(dibutylchlorzinn)phosphat,
Di[bis($\beta$-carboäthoxyäthyl)chlorzinn]phosphat,
Butylchlorzinn-zyklisches-O,O′-monoäthyl-phosphit,
Dibutylchlorzinn-dibutylphosphit,
Bis($\beta$-carboäthoxyäthyl)chlorzinn-diäthylphosphit,
Bis($\beta$-carboäthoxyäthyl)chlorzinn-dibutylphosphit,
Butylchlorzinn-zyklisches-O,O′-chlorphosphorodat, und
Dibutyljodzinn-dibutylphosphat.

**Revendications**

1. Procédé de préparation d'une mousse flexible de polyuréthane par réaction d'un polyéther polyol avec un isocyanate ou isothiocyanate polyfonctionnel en présence d'un agent gonflant et d'un catalyseur en gel, caractérisé en ce que le catalyseur en gel comprend un mono- ou diorganoétain ester d'un composé de phosphore contenant, sous forme chimiquement combinée, de l'étain, du phosphore et un halogène choisi parmi le chlore, le brome et l'iode, le composé contenant de 3 à 40% en poids d'etain, de 2 à 20% en poids de phosphore et de 3 à 70% en poids dudit halogène, et le composé de

phosphore étant un acide phosphorique, un acide phosphoreux, un acide phosphonique, un acide phosphinique, un acide thiophosphoreux, un chlorure de phosphoryle, ou un ester de l'un desdits acides contenant du phosphore.

2. Procédé de préparation d'une mousse flexible de polyuréthane selon la revendication 1, caractérisé en ce que le polyéther polyol est un prépolymère qui a été formé par réaction d'un polyéther polyol avec un isocyanate ou isothiocyanate polyfonctionnel.

3. Procédé selon la revendication 1 ou la revendication 2, où la teneur en étain dudit composé est de 3 à 30% en poids.

4. Procédé selon l'une des revendications précédentes, où la concentration du catalyseur en gel est comprise entre 0,005 et 1%, en se basant sur le poids du polyol.

5. Procédé selon l'une des revendications précédentes, où ledit composé est choisi parmi des composés ayant pour formules générales:

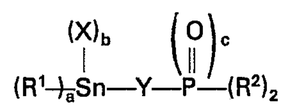

(I),

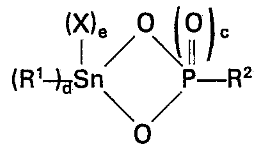

(II)

et

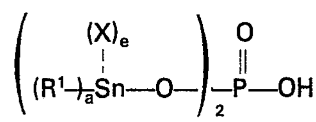

(III)

où $R^1$ est hydrocarbyle, haloalcoyle ou

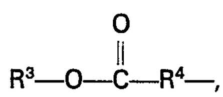

$R^2$ est hydrocarbyle, haloalcoyle, halogène ou $—OR^5$ où $R^5$ est hydrocarbyle ou haloalcoyle, $R^3$ est un alcoyle contenant de 1 à 20 atomes de carbone, un cycloalcoyle ou un phényle, $R^4$ est $—CH_2CH_2—$ ou $—CH(CH_3)CH_2—$, X est du chlore, du brome ou de l'iode, Y est de l'oxygène ou du soufre, *a*, *b* et *d* sont chacun 1 ou 2 et *e* est 0, 1 ou 2 à condition que (i) l'atome d'étain soit toujours lié à 4 atomes et (ii) ledit composé contienne toujours au moins un chlore, brome ou iode lié à l'étain, au carbone ou au phosphore et *c* est 0 ou 1, les groupes hydrocarbyles étant des groupes alcoyle, cycloalcoyle, aryle, aralcoyle ou alkaryle, tout groupe alcoyle ou haloalcoyle ayant de 1 à 20 atomes de carbone.

6. Procédé selon la revendication 5, où $R^1$, $R^2$ et $R^3$ sont choisis parmi les groupes alcoyles contenant de 1 à 8 atomes de carbone.

7. Procédé selon la revendication 5, où $R^2$ est un alcoxy contenant de 1 à 8 atomes de carbone.

8. Procédé selon la revendication 5, où $R^2$ est du $\beta$-chloroéthyle.

9. Procédé selon la revendication 5, où $R^2$ est du chlore et *c* est 1.

10. Procédé selon la revendication 5, où ledit composé est choisi parmi:
diéthyl phosphite de dibutylchloroétain,
phosphate de bis(dibutylchloroétain),
phosphate de di[bis($\beta$-carboéthoxyéthyl)chloroétain],
O,O'-monoéthyl phosphite cyclique de butylchloroétain,
dibutyl phosphite de dibutylchloroétain,
diéthyl phosphite de bis($\beta$-carboéthoxyéthyl)chloroétain,
dibutyl phosphite de bis($\beta$-carboéthoxyéthyl)chloroétain,
-O,O'-chlorophosphorodate cyclique de butylchloroétain, et
dibutyl phosphate de dibutyliodoétain.